# EUROPEAN PATENT APPLICATION

(11) **EP 1 150 486 A2**
(43) Date of publication of application: **31.10.2001**
(21) Application number: 01302104.3
(22) Date of filing: 07.03.2001
(51) Int. Cl.: H04N 1/00

(54) **Scanner with video output**

(30) Priority: 14.03.2000 US 525094
(71) Applicant: Hewlett-Packard Company, Palo Alto, California 94304-1112 (US)
(72) Inventor: Nuttall, Gordon R., Fort Collins, CO 80525 (US); Beiser, Paul S., Fort Collins, CO 80524 (US); Culp, Jerlyn R., Fort Collins, CO 80526 (US)
(74) Representative: Jackson, Richard Eric

(57) **Abstract**

In a scanner (4), analog sensor data is generated from a document. The analog sensor data is converted to an image video signal. The image video signal is delivered to a display system (6). The scanner (4) includes a controller for controlling the scanning of the document, converting the signals, and delivering the image video signal to the display system (6). The analog sensor data is generated by directing light from a light source (18) onto the document, the light is reflected onto a light sensor (20) that generates the analog sensor data response to the light reflected from the document. The analog sensor data may either be converted directly to the image video signal or first digitized to produce digitized sensor data. The image video signal is either a composite video image or an s-video image. Additionally, the scanner (4) may include a pass-through device for selectively passing an external video signal to the display system (6).

## Description

### FIELD OF THE INVENTION

This invention relates in general to image scanning technology and, more particularly, to a self controlled scanner with a video signal output.

### BACKGROUND OF THE INVENTION

Recent developments in technology have provided Internet access through television screens. As a part of this Internet access, electronic mail (e-mail) is available through the television. E-mail is useful for sending and receiving text messages as well as graphic information.

The systems for providing Internet access through the television are also able to capture images displayed on the television screen and send those images as attachments in e-mail messages. 'Television signal recording and playback devices are one means for selectively providing images to the television screen. Additionally, some digital cameras include features for providing a composite video signal to the television. However, there is currently no means for scanning a document and displaying an image of the document on the television.

### SUMMARY OF THE INVENTION

According to principles of the present invention, analog sensor data is generated in a scanner from a document. The analog sensor data is converted to an image video signal. The image video signal is delivered to a display system. The scanner includes a controller for controlling the scanning of the document, converting the signals, and delivering the image video signal to the display system.

According to further principles of the present invention, the analog sensor data is generated by directing light from a light source onto the document, the light is reflected onto a light sensor that generates the analog sensor data responsive to the light reflected from the document.

According to further principles of the present invention, the analog sensor data may either be converted directly to the image video signal or first converted into digitized sensor data.

According to further principles of the present invention, the image video signal is either a composite video image or an s-video image.

According to further principles of the present invention, the scanner may include a pass through device for selectively passing an external video signal to the display system.

Other objects, advantages, and capabilities of the present invention will become more apparent as the description proceeds.

### DESCRIPTION OF THE DRAWINGS

Figure 1 is a block diagram illustrating a video system including the present invention scanner.

Figure 2 is a block diagram illustrating multiple embodiments of the present invention scanner.

### DETAILED DESCRIPTION OF THE INVENTION

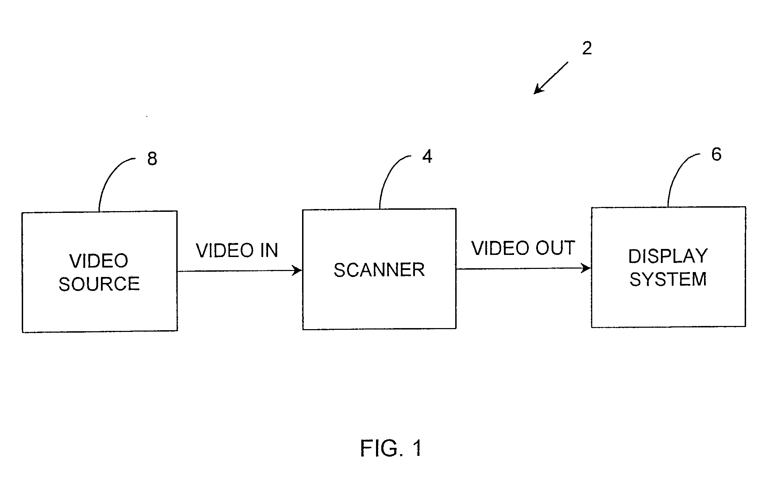

Illustrated in Figure 1 is a video system 2 including the present invention scanner 4 and a display system 6. Scanner 4 scans a document (not shown) and provides an image of the document to display system 6. Display system 6 is any display system, such as a television.

Although not necessary to the present invention, a video source 8 may also be included for providing an external video signal to display system 6. The external video signal is any video signal originating outside of scanner 4.

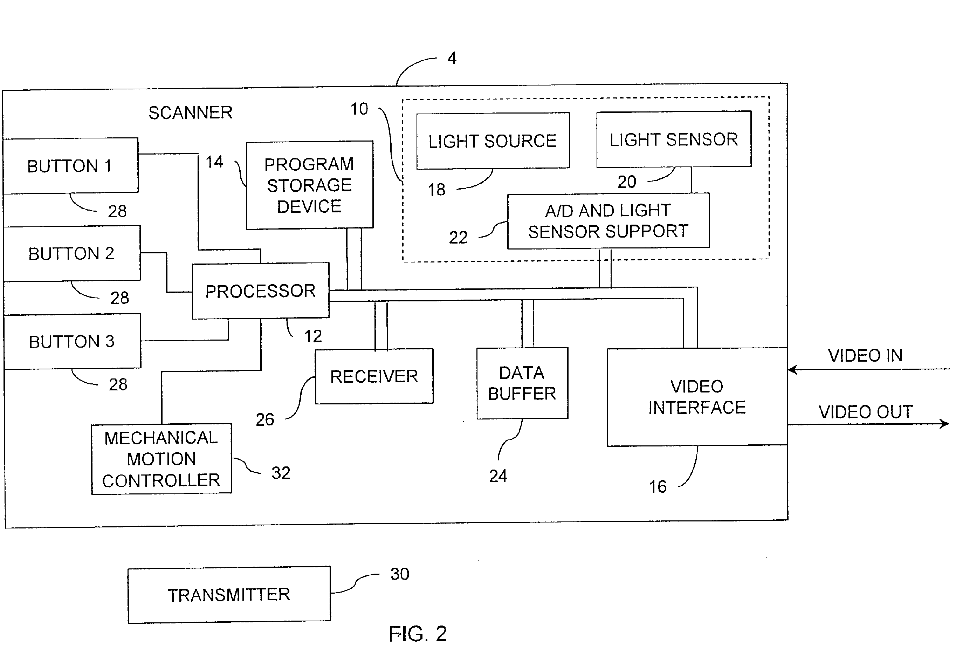

Illustrated in Figure 2 is a more detailed view of scanner 4. Scanner 4 includes an optical imaging subsystem 10, a processor 12, a program storage device 14, and a video interface 16. Program storage device 14 holds executable code executable by processor 12 for controlling optical imaging subsystem 10 and video interface 16. Program storage device 14 may hold the executable code as software, firmware, or hardwired code.

Optical imaging subsystem 10 is any system or device for optically scanning a document and generating a data signal responsive to the document. Optical scanning subsystems are well known in the art, as they are present in every conventional scanner to generate a data signal responsive to the document. In a conventional scanner, the data signal generated by an optical imaging subsystem is usually referred to simply as analog data. However, in order to more clearly describe the present invention, this data signal will be referred to as analog sensor data.

One embodiment of optical imaging subsystem 4 includes a light source 18, a light sensor 20, and a support module 22 for light sensor 20. Light source 18 is any light source useable by scanner 4 for reflecting light off of a document and onto light sensor 20. A fluorescent lamp is one example of a light source 18 useable by scanner 4.

Light sensor 20 is any light sensor useable by scanner 4 for sensing light from light source 18 and generating analog sensor data responsive to the light sensed from light source 18. One example of a light sensor 20 useable by scanner 4 is a charge-coupled device (CCD) array.

Support module 22 is any component or group of components required by light sensor 20 to properly generate the analog sensor data. For example, support module 22 may include a preamplifier or an analog to digital converter.

In one embodiment, the analog sensor data is communicated directly to video interface 16. In an alternate embodiment, the analog signal data from light sensor 20 is digitized by support module 22 to produce digitized sensor data. The digitized sensor data is communicated either to processor 12 or a data buffer 24 for temporarily storing the digitized sensor data. Data buffer 24 is any data storage device useable by scanner 4 for storing digitized sensor data.

Video interface 16 is any interface for delivering an image video signal to display system 6. The image video signal is any video signal useable by display system 6 for displaying an image on display system 6. Examples of conventional image video signal types for displaying images on a television include composite video and S-video.

In one embodiment, video interface 16 receives the digitized sensor data from data buffer 24 and from processor 12. Either processor 12 communicates the digitized sensor data to video interface 16 or processor 12 communicates to video interface 16 an address of the digitized sensor data within data buffer 24. In an alternate embodiment, video interface 16 generates the image video signal from the analog sensor data.

Additionally, in one embodiment, video interface 16 selectively acts as a conduit for external video signals from video source 8. Video interface 16 passes the external video signal to display system 6 as instructed by processor 12. Typically, external video signals will be passed through to display system 6 unless a document is being scanned by scanner 4. However, any criteria may be used for determining whether to pass the external video signals to display system 6.

Processor 12 is any processor able to process executable code stored in program storage device 14. Processor 12 controls optical imaging subsystem 10 and video interface 16 to scan the document and generate the image video signal representing an image of the document. Processor 12 additionally controls all communication within scanner 4. Processor 12 either generates the image video signal or controls video interface 16 to create the image video signal. In one embodiment, processor 12 also performs conversions on the digitized sensor data. The conversions may include image rotation, resizing, optimization, or enhancement.

In alternate embodiments, scanner 4 may include a receiver 26, at least one selector button 28, or a combination of receiver 26 and scanner buttons 28. Receiver 26 and buttons 28 are embodiments of a control interface for allowing a user to issue local control commands for providing instructions to processor 12. The local command are any commands for controlling processor 12. Examples of local control commands include instructions for initiating a scan, selecting a size for the document to be scanned or rotating, resizing, optimizing, or enhancing the image after it has been scanned.

Receiver 26 is useable in combination with a transmitter 30 for issuing the local control commands. Transmitter 30 transmits a remote control signal. The remote scan signal is any type of signal such as radio frequency or infrared. The remote control signal is received by receiver 26. Receiver 26 then communicates the local control commands to processor 12.

Selector buttons 28 issue local control commands to processor 12. Local control commands may be issued to processor 12 either by activating a particular selector button 28 or by activating a selector buttons 28 in a particular sequence.

In an additional embodiment, scanner 4 includes a mechanical motion controller 32. Mechanical motion controller 32 controls the mechanical motion necessary for the operation of scanner 4. For example, mechanical motion controller 32 controls the motion of the document across optical imaging subsystem 10 during a scan of the document. Alternatively, mechanical motion controller 32 controls the motion of optical imaging subsystem 10 across the document during a scan of the document.

It should be understood that the foregoing description is only illustrative of the invention. Various alternatives and modifications can be devised by those skilled in the art without departing from the invention. Accordingly, the present invention is intended to embrace all such alternatives, modifications, and variances that fall within the scope of the appended claims.

## Claims

1. A scanner (4) for displaying an image of a document on a display system (6), the scanner (4) comprising:
(a) optical imaging means for generating analog sensor data from the document;
(b) means for processing the analog sensor data to generate an image video signal;
(c) means for delivering the image video signal to the display system (6) for displaying an image of the document; and,
(d) control means for controlling the optical imaging means, the means for processing, and the means for delivering.

2. The scanner (4) of claim 1 wherein the optical imaging means includes:
(a) a light source (18);
(b) a light sensor (20) having means for generating the analog sensor data responsive to light originating from the light source (18) reflected by the document; and,
wherein the control means further includes means for controlling the light source (18).

3. The scanner (4) of claim 1 wherein the means for processing the analog sensor data includes:
(a) means for digitizing the analog sensor data to produce digitized sensor data; and,
(b) means for converting the digitized sensor data to the image video signal.

4. The scanner (4) of claim 1 further including:
(a) means for receiving an external video signal; and,
(b) means for selectively delivering the external video signal to the display system (6) for display.

5. The scanner (4) of claim 1 further including a user control interface (16) having means for issuing local control commands for providing instructions to the control means.

6. A program storage device (14) readable by a computer, tangibly embodying a program, applet, or instructions executable by the computer to displaying an image of a document on a display system (6), the method steps comprising
(a) generating analog sensor data from the document;
(b) processing the analog sensor data to generate an image video signal; and,
(c) delivering the image video signal to the display system (6) for displaying an image of the document.

7. The program storage device (14) of claim 6 wherein the step of generating analog sensor data includes:
(a) controlling a light source (18) to produce light;
(b) stimulating a light sensor (20) by reflecting the light off the document and onto a light sensor (20) to generate analog sensor data responsive to light originating from the light source (18) reflected by the document; and.

8. The program storage device (14) of claim 6 wherein the format of the image video signal is selected from the group consisting of a composite video format and an s-video format.

9. The program storage device (14) of claim 6 wherein the step of processing the analog sensor data includes:
(a) digitizing the analog sensor data to produce digitized sensor data; and,
(b) converting the digitized sensor data to the image video signal.

10. The program storage device (14) of claim 6 further including the method steps:
(a) receiving an external video signal; and,
(b) selectively delivering the external video signal to the display system (6) for display.
